# EUROPEAN PATENT APPLICATION

(11) **EP 1 544 646 A1**
(43) Date of publication of application: **22.06.2005**
(21) Application number: 04078456.3
(22) Date of filing: 17.12.2004
(51) Int. Cl.: G02B 6/125, G02B 6/134

(54) **Mach-Zehnder Interferometer, optical coupler, and manufacturing method of optical coupler**

(30) Priority: 19.12.2003 JP 2003423537
(71) Applicant: Advantest Corporation, Nerima-ku, Tokyo 179-0071 (JP)
(72) Inventor: Sakurai, Takao, c/o Advantest Corporation, Tokyo 179-0071 (JP); Araki, Toshiyuki, c/o Advantest Corporation, Tokyo 179-0071 (JP); Kishi, Nobuhito, c/o Advantest Corporation, Tokyo 179-0071 (JP)
(74) Representative: Pfenning, Meinig & Partner

(57) **Abstract**

An optical coupler having a Y-branch operable to mix and output a first light and a second light from outside. The optical coupler includes: a first input optical wave guide operable to propagate the first light from outside; a second input optical wave guide operable to propagate the second light from outside; an optical coupler operable to output a mixed light, which is a mixture of the first light and the second light; and an output optical wave guide operable to propagate the mixed light and to output it from an end, wherein a width or a cross section area of said output optical waveguide is less than a width or a cross section area of an input optical waveguide.

## Description

This application claims the benefit of Japanese Patent Application No.2003-423537 filed on December 19, 2003, the disclosure of which is incorporated herein by reference.

### BACKGROUND OF THE INVENTION

### FIELD OF THE INVENTION

The present invention relates to a Mach-Zehnder interferometer, an optical coupler, and a manufacturing method of the optical coupler. More particularly, the present invention relates to a Mach-Zehnder interferometer and an optical coupler having a good extinction ratio, and a manufacturing method of the optical coupler.

### DESCRIPTION OF RELATED ART

Conventionally, an optical coupler is realized including a first optical wave guide which propagates first light, a second optical wave guide which propagates second light, and an output optical wave guide which propagates mixed light, which is the mixture of the first light and the second light, and output it from its one end. In such an optical coupler, the luminous intensity output from the output optical wave guide varies due to the interference of the two lights input from the first and second optical wave guides into the output optical wave guide depending on the phase of each light. Ideally, when the two lights, of which the intensities are the same as each other and the phases are inverted from each other, enter the output optical wave guide, it is preferable that such the lights are offset mutually, emitted from the periphery of the output optical wave guide, and the output luminous intensity is made to be zero.

Therefore, an extinction ratio is defined as an index indicating a property of the optical coupler. The extinction ratio is a ratio of the output luminous intensity when the two lights, having the same intensities and the reversed phase, enter the output optical wave guide, to the output luminous intensity when the two lights, having the same intensities and the same phases, enter the output optical wave guide.

Japanese Patent Laid-Open No. 8-194195, Japanese Patent Laid-Open No. 9-318367, Japanese Patent No. 3102874, Japanese Patent Laid-Open No. 9-21985, and Japanese Patent Laid-Open No. 10-73792 disclose some technologies to improve the extinction ratio in the optical coupler. Japanese Patent Laid-Open No. 8-194195 discloses a technology which improves the separability of output light and emission light by either means of bending the output optical wave guide, or shifting the optical axes of the first optical wave guide and the second optical wave guide for the Mach-Zehnder light modulator.

Japanese Patent Laid-Open No. 9-318367 discloses a technology which provides a slot between the first optical wave guide and the second optical wave guide etc. and the output optical wave guide being bent in an optical fiber gyroscope which includes the optical coupler, which improves the separability of the output light and the emission light, and improves the observed extinction ratio.

Japanese Patent No. 3102874 and Japanese Patent Laid-Open No. 9-21985 disclose a technology for making the width of the incidence wave guide small to reduce the branching ratio variance due to the light incidence with axial shift for a Y-branching optical circuit which propagates the incident light in an incidence wave guide and branches the light to a first wave guide and a second wave guide.

Japanese Patent Laid-Open No. 10-73792 discloses a technology for the Mach-Zehnder modulator which provides a central taper section between a Mach-Zehnder light modulator for guiding light of high intensity and an optical fiber for guiding light of low intensity to reduce the influence of the shift of the optical axis at the portion where the Mach-Zehnder modulator meets the optical fiber.

Japanese Patent Laid-Open No. 8-194195, Japanese Patent Laid-Open No. 9-318367, Japanese Patent No. 3102874, Japanese Patent Laid-Open No. 9-21985, and Japanese Patent Laid-Open No. 10-73792-are aiming to solve different problems among the problems by which the extinction ratio deteriorates in the optical coupler.

According to Japanese Patent Laid-Open No. 8-194195 and Japanese Patent Laid-Open No. 9-318367, the emission light caused as a result of the interference of the first light and the second light in the optical coupler is separated from the output light of the output optical wave guide so that only the output light can be observed. This prevents observing the emission light even when the lights having the same intensity and inverted phase enter the first optical wave guide and the second optical wave guide, so that the degradation of the extinction ratio can be reduced. However, the space for arranging a third optical waveguide, which is bent, and for providing a slot between the optical wave guides are needed, and consequently that increases a manufacturing cost.

According to Japanese Patent No. 3102874 and Japanese Patent Laid-Open No. 9-21985, degradation of the extinction ratio is reduced by branching the incident light and deterring the branching ratio variance of the optical branch for guiding the light to the first optical wave guide and the second optical wave guide of the optical coupler so that the luminous intensities in the first optical wave guide and the second optical wave guide become close to each other.

According to Japanese Patent Laid-Open No. 10-73792, degradation of the extinction ratio caused by the shift of the optical axes of the optical fiber when the light enters the optical fiber after the light is mixed in the Mach-Zehnder light modulator can be reduced.

On the other hand, the inventors of the present application discovered that the extinction ratio deteriorates also according to a cause different from above all, as a result of investigating the causes which degrade the extinction ratio in the optical coupler in order to further improve the extinction ratio of the optical coupler.

Therefore, it is an object of the present invention to provide a Mach-Zehnder interferometer, an optical coupler, and a manufacturing method of the optical coupler capable of solving the newly discovered problem and for effectively reducing the degradation of the extinction ratio in the optical coupler. The above and other objects can be achieved by combinations described in the independent claims. The dependent claims define further advantageous and exemplary combinations of the present invention.

### SUMMARY OF INVENTION

According to a first aspect of the present invention, there is provided an optical coupler having a Y-branch operable to mix and output a first light and a second light from outside. The optical coupler includes: a first input optical wave guide operable to propagate the first light from outside; a second input optical wave guide operable to propagate the second light from outside; an optical coupler operable to output a mixed light, which is a mixture of the first light and the second light; and an output optical wave guide operable to propagate the mixed light and to output it from an end, wherein percentage per unit length of emitting light being propagated in the output optical wave guide to a periphery of the output optical wave guide is higher than that of the first input optical wave guide or the second input optical wave guide.

A width of the output optical wave guide may be less than a width of the first input optical wave guide or a width of the second input optical wave guide. Moreover, a cross section area of the output optical wave guide may be less than a cross section area of the first input optical wave guide or a cross section area of the second input optical wave guide.

Moreover, the first input optical wave guide, the second input optical wave guide, and the output optical wave guide may be formed by diffusing metal into portions where the optical wave guides are to be formed in a substrate made of a ferroelectric crystal, and amount of metal diffusion per unit length of the output optical wave guide may be less than that of the first input optical wave guide or the second input optical wave guide.

Moreover, the first input optical wave guide, the second input optical wave guide, and the output optical wave guide may be formed by diffusing titanium into portions where the optical wave guides are to be formed in a substrate made of lithium niobate, and amount of titanium diffusion per unit length of the output optical wave guide may be less than that of the first input optical wave guide or the second input optical wave guide.

Moreover, the first input optical wave guide, the second input optical wave guide, and the output optical wave guide may be formed by proton exchange of portion where the optical wave guides are to be formed in a substrate made of a ferroelectric crystal, and amount of proton exchange per unit length of the output optical wave guide may be less than that of the first input optical wave guide or the second input optical wave guide.

According to a second aspect of the present invention, there is provided a Mach-Zehnder interferometer. The Mach-Zehnder interferometer includes: an optical branch operable to branch an input light; and an optical mixer operable to mix two branched lights, wherein the Mach-Zehnder interferometer employs the optical coupler according to the first aspect of the present invention for the optical mixer. The Mach-Zehnder interferometer may further employ the optical coupler according to the first aspect of the present invention for the optical branch.

According to a third aspect of the present invention, there is provided a manufacturing method of an optical coupler having a Y-branch operable to mix and output a first light and a second light from outside. The method includes steps of forming a first input optical wave guide operable to propagate the first light from outside; forming a second input optical wave guide operable to propagate the second light from outside; forming an optical coupler operable to output a mixed light, which is a mixture of the first light and the second light; and forming an output optical wave guide operable to propagate the mixed light and to output it from an end, wherein the output optical wave guide is formed in the step of forming an output optical wave guide so that a percentage per unit length of emitting light being propagated therein to a periphery of the output optical wave guide is higher than that of the first input optical wave guide or the second input optical wave guide.

Each of the step of forming a first input optical wave guide, the step of forming a second input optical wave guide, and the step of forming a output optical wave guide may include steps of: forming a metal to form metal film at a portion where an optical wave guide is to be formed on a surface of a substrate made of a ferroelectric crystal; diffusing the metal film in the substrate to form an optical wave guide, wherein the metal film, which has smaller width than the metal film formed in the step of forming a first input optical wave guide or the step of forming a second input optical wave guide, may be formed in the step of forming a metal film in the step of forming an output optical wave guide.

Moreover, Each of the step of forming a first input optical wave guide, the step of forming a second input optical wave guide, and the step of forming a output optical wave guide may include steps of: forming a metal to form metal film at a portion where an optical wave guide is to be formed on a surface of a substrate made of a ferroelectric crystal; diffusing the metal film in the substrate to form an optical wave guide, wherein the metal film, which is thinner than the metal film formed in the step of forming a first input optical wave guide or the step of forming a second input optical wave guide, may be formed in the step of forming a metal film in the step of forming an output optical wave guide.

Moreover, a titanium film may be formed on a surface of a substrate made of lithium niobate in the step of forming a metal film, and an optical wave guide may be formed by diffusing the titanium film in the substrate in the step of diffusing the metal film.

Moreover, each of the step of forming a first input optical wave guide, the step of forming a second input optical wave guide, and the step of forming an output optical wave guide may include steps of: forming a metal film at a portion where an optical wave guide is to be formed on a surface of a substrate made of a ferroelectric crystal; and diffusing the metal film in the substrate to form an optical wave guide, wherein the step of forming the metal film in each of the step of forming a first input optical wave guide, the step of forming a second input optical wave guide, and the step of forming an output optical wave guide may include steps of: laminating a metal film on the substrate; forming a mask pattern for masking a portion where the first input optical wave guide, the second input optical wave guide, and the output optical wave guide are to be formed on the metal film laminated on the substrate; removing a portion not being masked by the mask pattern in the metal film which is laminated on the substrate to form the metal film at a portion where an optical wave guide is to be formed, wherein a width of a mask pattern which masks a portion where the output optical wave guide is to be formed may be less than a width of a mask pattern which masks a portion where the first input optical wave guide or the second input optical wave guide is to be formed.

Moreover, the step of forming a first input optical wave guide, the step of forming a second input optical wave guide, and the step of forming an output optical wave guide may include steps of: forming a mask pattern which includes openings at portions where the first input optical wave guide, the second input optical wave guide, and the output optical wave guide are to be formed on a surface of a substrate made of a ferroelectric crystal; and carrying out proton exchange of portions exposed from the mask pattern on the surface of the substrate to form the first input optical wave guide, the second input optical wave guide, and the output optical wave guide, wherein a width of the opening at a portion where the output optical wave guide is to be formed in the step of forming the mask pattern may be less than a width of the opening at a portion where the first input optical wave guide or the second input optical wave guide is to be formed.

Moreover, the step of forming a first input optical wave guide, the step of forming a second input optical wave guide, and the step of forming an output optical wave guide may include steps of: forming a mask pattern which includes openings at portions where the first input optical wave guide, the second input optical wave guide, and the output optical wave guide are to be formed on a surface of a substrate made of a ferroelectric crystal; and carrying out proton exchange of portions exposed from the mask pattern on the surface of the substrate to form the first input optical wave guide, the second input optical wave guide, and the output optical wave guide, wherein amount of proton exchange per unit length in the opening at a portion where the output optical wave guide is to be formed in the step of carrying out proton exchange may be less than amount of proton exchange per unit length in the opening at a portion where the first input optical wave guide or the second input optical wave guide is to be formed.

The summary of the invention does not necessarily describe all necessary features of the present invention. The present invention may also be a sub-combination of the features described above.

### BRIEF DESCRIPTION OF THE DRAWINGS

Fig. 1 shows a configuration of an optical coupler according to an embodiment of the present invention.

Fig. 2A shows a light wave emitted from the optical coupler according to a conventional manner.

Fig. 2B shows a light wave emitted from the optical coupler according to an embodiment of the present invention.

Fig. 3A shows a manufacturing method of the optical coupler according to an embodiment of the present invention in a substrate preparation step.

Fig. 3B shows the manufacturing method of the optical coupler according to the embodiment of the present invention in a metal film formation step.

Fig. 3C shows the manufacturing method of the optical coupler according to the embodiment of the present invention in a diffusion step.

Fig. 4A shows a manufacturing method of the optical coupler according to a first alternative of the embodiment of the present invention in a substrate preparation step.

Fig. 4B shows the manufacturing method of the optical coupler according to the first alternative of the embodiment of the present invention in a metal film formation step.

Fig. 4C shows the manufacturing method of the optical coupler according to the first alternative of the embodiment of the present invention in a diffusion step.

Fig. 5A shows a manufacturing method of the optical coupler according to a second alternative of the embodiment of the present invention in a substrate preparation step.

Fig. 5B shows the manufacturing method of the optical coupler according to the second alternative of the embodiment of the present invention in a mask pattern formation step.

Fig. 5C shows the manufacturing method of the optical coupler according to the second alternative of the embodiment of the present invention in a proton exchange step.

Fig. 5D shows the manufacturing method of the optical coupler according to the second alternative of the embodiment of the present invention in a mask pattern removal step.

Fig. 6 shows a configuration of a Mach-Zehnder interferometer according to an embodiment of the present invention.

### DETAILED DESCRIPTION OF THE INVENTION

The invention will now be described based on preferred embodiments, which do not intend to limit the scope of the present invention, but exemplify the invention. All of the features and the combinations thereof described in the embodiments are not necessarily essential to the invention.

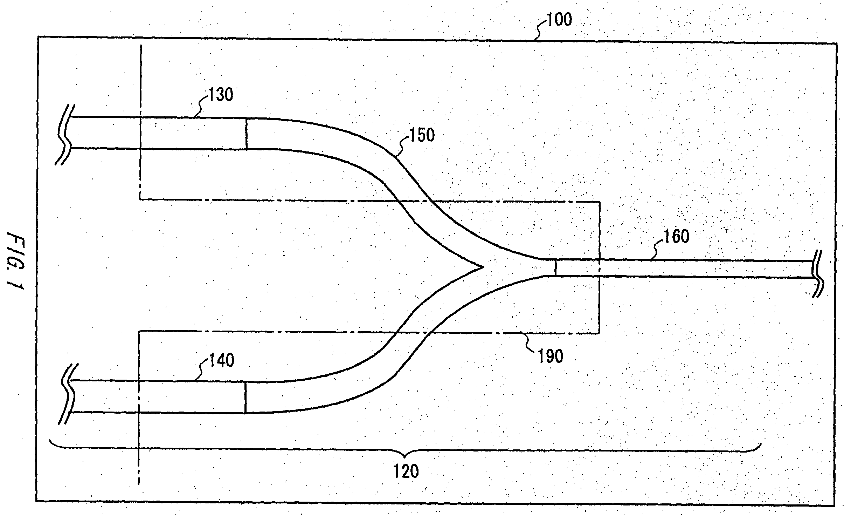

Fig. 1 shows a configuration of an optical coupler 120 according to an embodiment. The optical coupler 120 is a Y-branching optical coupler which mixes and outputs the first light and the second light from the outside. The optical coupler 120 includes a first input optical wave guide 130, a second input optical wave guide 140, an optical coupler 150, and an output optical wave guide 160.

The first input optical wave guide 130 propagates the first light from the outside, and inputs it into the optical coupler 150. The second input optical wave guide 140 propagates the second light from the outside, and inputs it into the optical coupler 150. Here, when the optical coupler 120 is used as an optical coupler of a Mach-Zehnder light modulator, the first light and the second light, which are branched from the light in the wave guide located upstream of the branching point, may be input into the first input optical wave guide 130 and the second input optical wave guide 140, respectively.

The optical coupler 150 outputs a mixed light, which is the mixture of the first light from the first input optical wave guide 130 and the second light from the second input optical wave guide 140. The output optical wave guide 160 propagates the mixed light, and outputs it from an end. The output optical wave guide 160 according to the present embodiment includes a feature that the percentage per unit length of emitting the light being propagated in the wave guide is higher than that of the first input optical wave guide 130 or the second input optical wave guide 140 so as to improve the extinction ratio of the optical coupler 120. More particularly, a cross section area of the output optical wave guide 160 may be less than a cross section area of the first input optical wave guide 130 or the second input optical wave guide 140, for example. Alternatively, a width of the output optical wave guide 160 may be less than that of the first input optical wave guide 130 or the second input optical wave guide 140. Moreover, after forming the first input optical wave guide 130 and the second input optical wave guide 140 same as the output optical wave guide 160, the percentage of the light emission from the first input optical wave guide 130 and the second input optical wave guide 140 may be reduced by ridge processing of the first input optical wave guide 130 and the second input optical wave guide 140. In addition, when the optical coupler 120 is used as an optical coupler of a Mach-Zehnder light modulator, the output optical wave guide 160 may have a higher percentage per unit length of emitting the light being propagated in the optical wave guide to the periphery of the optical wave guide than that of the optical wave guide before being branched.

In this embodiment, the optical coupler 120 is formed on the substrate 100 made of ferroelectric crystals, such as lithium niobate or lithium tantalate. Moreover, the first input optical wave guide 130, the second input optical wave guide 140, the optical coupler 150, and/or the output optical wave guide 160 are made of diffusing metal, such as titanium, into a portion where the optical wave guide is to be formed in a layer of the ferroelectric crystal of the substrate 100. Then, by forming the output optical wave guide 160 so that the diffusion of metal, such as titanium, in per unit length, may become less than that of the first input optical wave guide 130 and the second input optical wave guide 140, the output optical wave guide 160 is formed so that the width or the thickness, or the cross section area which is vertical to the wave guide direction may become small.
Alternatively, the first input optical wave guide 130, the second input optical wave guide 140, the optical coupler 150, and/or the output optical wave guide 160 may be formed by proton exchange of the portion where the optical wave guide is to be formed in the layer of the ferroelectric crystal of the substrate 100. Then, by forming the output optical wave guide 160 so that the quantity of proton exchange in per unit length may become less than that of the first input optical wave guide 130 or the second input optical wave guide 140, the output optical wave guide 160 is formed so that the width or the thickness, or the cross section area which is vertical to the wave guide direction may become small.

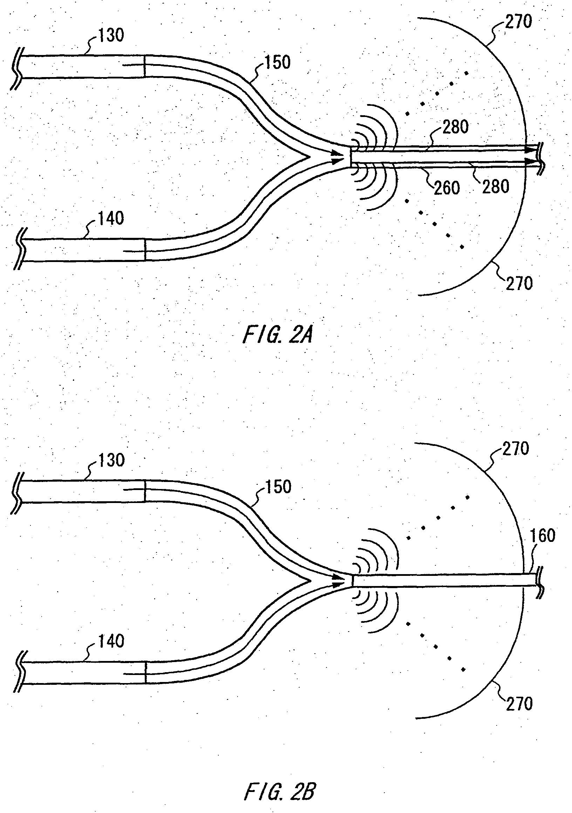

Fig. 2A shows a light wave 270 emitted from the optical coupler 120 according to a conventional manner, and Fig. 2B shows a light wave 270 emitted from the optical coupler 120 according to an embodiment of the present invention. As shown in Fig. 2A, it is common to form it so that the percentage per unit length of emitting the light being propagated in the optical wave guide to the periphery of the optical wave guide for the first input optical wave guide 130, the second input optical wave guide 140 and the output optical wave guide 260 becomes low so as to reduce the propagation loss of light in the conventional configuration. That is, as for the first input optical wave guide 130, the second input optical wave guide 140, and the output optical wave guide 260, substantially the same optical wave guide is used, of which the refractive index distribution may be determined to sufficiently confine the light to achieve low loss.

When the first light and the second light, of which the intensities are the same as each other and the phases are inverted from each other, enter to the optical coupler 150, ideally, the optical coupler 150 mixes the lights, it becomes the light having higher order mode, and is emitted to the exterior of the output optical wave guide 260 as the light wave 270. Consequently, the light wave does not mixed to the output optical wave guide 260. However, when the optical coupler 120 using the first input optical wave guide 130, the second input-side optical wave guide 140, and the output optical wave guide 260 which sufficiently confine the light is used for the first light and the second light having wide wavelength domain, not all emitting light can be emitted to the exterior of the output optical wave guide 260 at the wavelength domain. That is, as a result of conditions, such as the incident angle at the time of the mixture in the optical coupler 150, being greatly different depending on the wavelength, a part of the higher order mode light, which is to be emitted as the light wave 270, is confined in the output optical wave guide 260. Such a light will be propagated without attenuation along the side of the output optical wave guide 260 as the light wave 280, will be propagated to the center of the output optical wave guide 260, and will be observed as the output light.

As described above, a person having ordinary skill in the art will understand that there is another cause of the degradation of the extinction ratio different from Japanese Patent Laid-Open No. 8-194195, Japanese Patent Laid-Open No. 9-318367, Japanese Patent No. 3102874, Japanese Patent Laid-Open No. 9-21985, and Japanese Patent Laid-Open No. 10-73792. That is, the extinction ratio of the optical coupler 120 shown in Fig. 2A deteriorates by propagating the higher order mode light caused when the first light and the second light having the same intensities and inversed phases are mixed and by outputting the mixed light as the output light.

In order to solve the above-mentioned problem and to obtain a good extinction ratio, as shown in Fig. 2B, an optical wave guide of the output optical wave guide 160 according to the present embodiment is formed so that the less light is to be confined in it than the first input optical wave guide 130 and the second input optical wave guide 140. That is, for example, even if it has the same refractive index distribution, the output optical wave guide 160 uses an optical wave guide having small cross section area, width, etc. The percentage per unit length of emitting the light being propagated in the optical wave guide is higher than that of the first input optical wave guide 130 or the second input optical wave guide 140. Consequently, compared with the output optical wave guide 260, the output optical wave guide 160 leaks out a light energy by the light wave having wide wavelength domain, and facilitates the emission of the higher order mode light being propagated in the output optical wave guide 160. Therefore, the light, which is the mixture of the first light and the second light and became a higher order mode light, is efficiently emitted as the light wave 270, and can reduce the proportion output as the output light from an end of the output optical wave guide 160.

As described above, according to the optical coupler 120 of the present embodiment, a good extinction ratio is realizable by efficiently emitting the higher order mode light caused by the optical coupler 150. Moreover, the above-mentioned structure has a feature that it is smaller and can be manufactured easier than the optical coupler disclosed in Japanese Patent Laid-Open No. 8-194195 and Japanese Patent Laid-Open No. 9-318367.

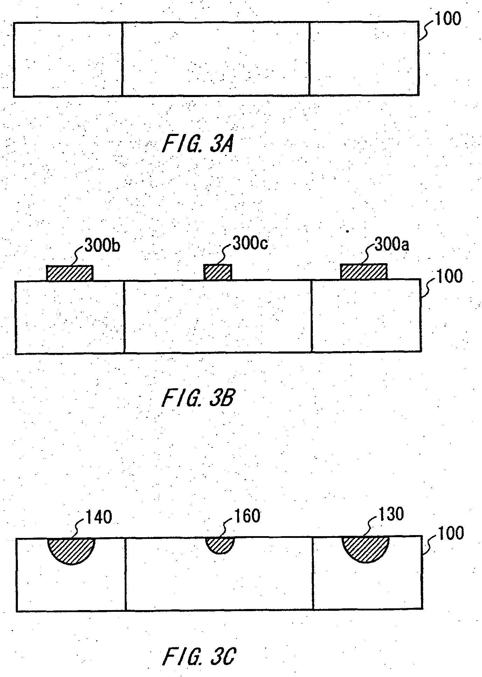

Figs. 3A-3C show a manufacturing method of the optical coupler 120 according to the present embodiment. Figs. 3A-3C are sectional views taken on line 190 in Fig. 1 and show the structure of the optical coupler 120 in each manufacturing step seen from a side of.the output optical wave guide 160.

First, as shown in Fig. 3A, in a substrate preparation step, the substrate 100 made of a ferroelectric crystal is prepared. Next, as shown in Fig. 38, in a metal film formation step in the first input optical wave guide formation step to form the first input optical wave guide 130, a titanium film 300a, which is an example of a metal film, is formed on the portion where the optical wave guide is to be formed on a surface of the layer of the ferroelectric crystal of the substrate 100. Moreover, in the metal film formation step in the second input optical wave guide formation step to form the second input optical wave guide 140, a titanium film 300b, which is an example of a metal film, is formed on a surface of the layer of the ferroelectric crystal of the substrate 100.

Moreover, in the metal film formation step in the output optical wave guide formation step to form the output optical wave guide 160, a titanium film 300c, which is an example of a metal film, is formed on the portion where the optical wave guide is to be formed on a surface of the layer of the ferroelectric crystal of the substrate 100. In the metal film formation step in the output optical wave guide formation step, portion of the metal in the optical wave guide per unit length is lessened by forming titanium film 300c with a width smaller than that of the first input optical wave guide formation step or the second input optical wave guide formation step. The thickness of the titanium film 300c may be the same as the thickness of the titanium film 300a or 300b.

More specifically in the first input optical wave guide formation step, the second input optical wave guide formation step, and the metal film formation step in the output optical wave guide formation step, titanium films 300a-300c are formed with a procedure described below. First, in a metal film laminating step, a metal film is laminated on the whole surface of the substrate 100. Next, in a mask pattern formation step, mask pattern is formed on portions at which the first input optical wave guide 130, the second input optical wave guide 140, and the output optical wave guide 160 are to be formed, on the metal film laminated on the substrate 100. Here, in order to make the width of the output optical wave guide 160 to be less than the first input optical wave guide 130 or the second input optical wave guide 140, the width of the mask pattern corresponding to the portion where the output optical wave guide 160 is to be formed can be made less than the width of the mask pattern corresponding to the portion where the first input optical wave guide 130 or the second input optical wave guide 140 are to be formed. Next, in a removal step, the titanium films 300a-300c are formed on the portion where the optical wave guides are to be formed by removing the portion not being masked by the mask pattern on the metal film laminated on the substrate 100.

Next, as shown in Fig. 3C, in a diffusion step in the first input optical wave guide formation step, the titanium film 300a is diffused in the substrate 100, and the first input optical wave guide 130 embedded in the layer of the ferroelectric crystal in the substrate 100 is formed. Moreover, in the diffusion step in the second input optical wave guide formation step, the titanium film 300b is diffused in the substrate 100, and the second input optical wave guide 140 embedded in the layer of the ferroelectric crystal in the substrate 100 is formed. Moreover, in the diffusion step in the output optical wave guide formation step, the titanium film 300c is diffused in the substrate 100, and the output optical wave guide 160 embedded in the layer of the ferroelectric crystal in the substrate 100 is formed.

In addition, also in an optical coupler formation step to form the optical coupler 150, the optical coupler 150 is formed, for example like the above-mentioned metal film formation step and the diffusion step.

According to the manufacturing method of the optical coupler 120 described above, the first input optical wave guide 130, the second input optical wave guide 140, and the output optical wave guide 160 having smaller width than the first input optical wave guide 130 or the second input optical wave guide 140 can be formed in the substrate 100, and the optical coupler 120 having a good extinction ratio can be manufactured.

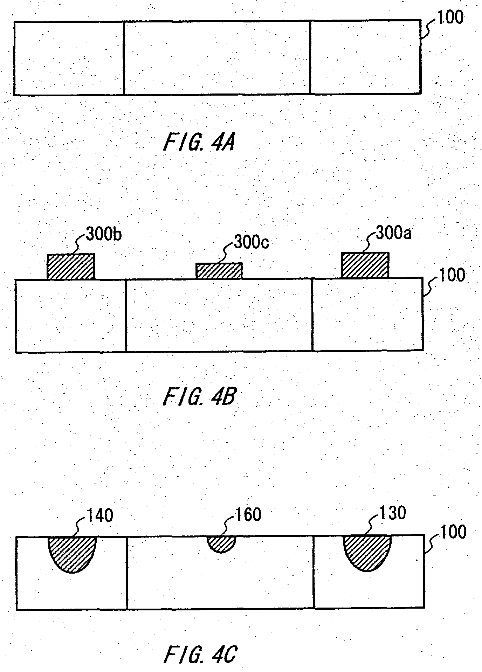

Figs. 4A-4C show a manufacturing method of the optical coupler 120 according to a first alternative of the present embodiment. Figs. 4A-4C are sectional views taken on line 190 in Fig. 1 and show the structure of the optical coupler 120 in each manufacturing step seen from a side of the output optical wave guide 160.

First, as shown in Fig. 4A, in a substrate preparation step, the substrate 100 made of the ferroelectric crystal is prepared like the example explained with reference to Fig. 3A. Next, as shown in Fig. 4B, in a metal film formation step in a first input optical wave guide formation step, in a second input optical wave guide formation step, and in an output optical wave guide formation step, the titanium films 300a-300c, each of which is an example of a metal film, are formed on the surface of the layer of the ferroelectric crystal in the substrate 100. Here, in the metal film formation step in the output optical wave guide formation step, portion of the metal for the optical wave guide per unit length is lessened by forming the titanium film 300c thinner than in the first input optical wave guide formation step and in the second input optical wave guide formation step. The width of the titanium film 300c may be the same as the width of the titanium film 300a or 300b.

Next, as shown in Fig. 4C, in a diffusion step in each of the first input optical wave guide formation step, the second input optical wave guide formation step, and the output optical wave guide formation step, the titanium films 300a-300c are diffused in the substrate 100, and the first input optical wave guide 130, the second input optical wave guide 140, and the output optical wave guide 160, which are embedded in the layer of the ferroelectric crystal in the substrate 100, are formed, respectively. In addition, also in the optical coupler formation step to form the optical coupler 150, the optical coupler 150 is formed, for example, like the above-mentioned metal film formation step and the diffusion step.

According to the manufacturing method of the optical coupler 120 described above, the first input optical wave guide 130, the second input optical wave guide 140, and the output optical wave guide 160 having smaller width or smaller cross section area than the first input optical wave guide 130 or the second input optical wave guide 140 can be formed in the substrate 100, and the optical coupler 120 having a good extinction ratio can be manufactured.

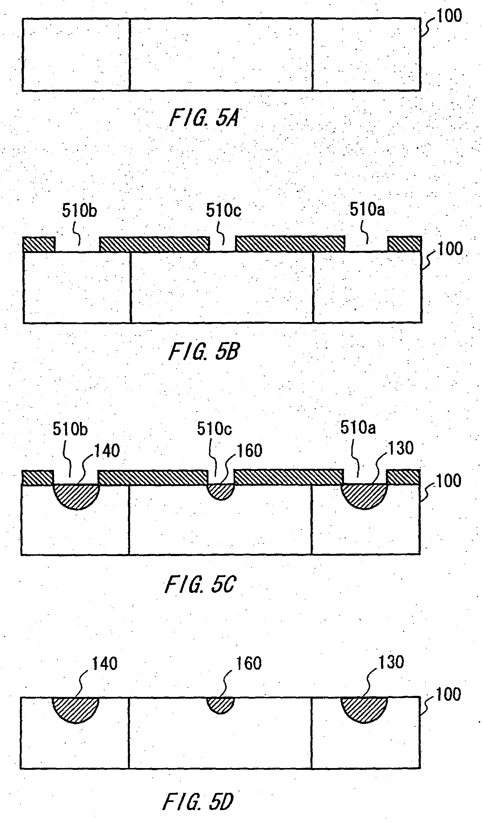

Figs. 5A-5D show a manufacturing method of the optical coupler 120 according to a second alternative of the present embodiment. Figs. 5A-5D are sectional views taken on line 190 in Fig. 1 and show the structure of the optical coupler 120 in each manufacturing step seen from a side of the output optical wave guide 160.

First, as shown in Fig. 5A, in a substrate preparation step, the substrate 100 made of a ferroelectric crystal is prepared like the example explained with reference to Fig. 3A. Next, as shown in Fig. 5B, in a mask pattern formation step in each of a first input optical wave guide formation step, a second input optical wave guide formation step, and an output optical wave guide formation step, a mask pattern 500, which has openings 510a-510c at the portions where the first input optical wave guide 130, the second input optical wave guide 140, and the output optical wave guide 160 are to be formed, is formed. In this case, the width of opening 510c at the portion where the output optical wave guide 160 is to be formed is less than the width of the opening 510a or 510b at the portion where the first input optical wave guide 130 or the second input optical wave guide 140 is to be formed.

Next, as shown in Fig. 5C, in a proton exchange step, a portion exposed from the surface mask pattern 500 of the substrate 100 is immersed in liquid including benzoic acid, proton exchange is carried out, and then the first input optical wave guide 130, the second input optical wave guide 140, and the output optical wave guide 160 are formed. Here, since the width of the opening 510c is less than the width of the opening 510a or 510b, amount of proton exchange per unit length in the opening 510c at the portion where the output optical wave guide 160 is to be formed can be made less than amount of proton exchange per unit length in the opening 510a or 510b at the portion where the first input optical wave guide 130 or the second input optical wave guide 140 is to be formed. Next, as shown in Fig. 5D, the mask pattern 500 is removed in a mask pattern removal step.

According to the manufacturing method of the optical coupler 120 described above, the first input optical wave guide 130, the second input optical wave guide 140, and the output optical wave guide 160 having smaller width or smaller cross section area than the first input optical wave guide 130 or the second input optical wave guide 140 can be formed by the proton exchange on the substrate 100, and the optical coupler 120 having a good extinction ratio can be manufactured.

In addition, instead of making the width of the opening 510c less than the width of the opening 510a or 510b, it is possible to make the widths of the openings 510a-510c substantially the same as one another, and make duration of the proton exchange for the opening 510c at the portion where the output optical wave guide 160 is to be formed to be shorter than duration of the proton exchange for the opening 510a or 510b at the portion where the first input optical wave guide 130 or the second input optical wave guide 140 is to be formed.

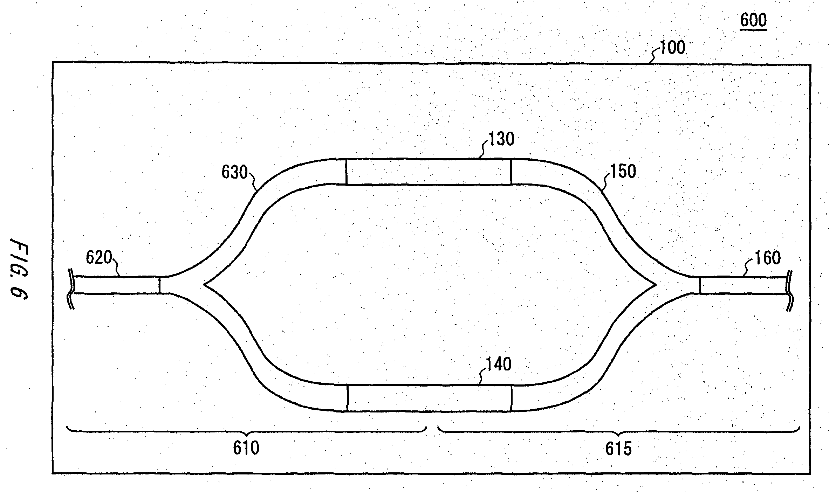

Fig. 6 shows a configuration of a Mach-Zehnder interferometer 600 according to the present embodiment. The Mach-Zehnder interferometer 600 includes an optical branch 610 which branches the input light, and the optical mixer 615 which mixes two lights which have been branched by the optical branch 610. The optical coupler 120 shown in Fig. 1 is used as the optical mixer 615 of the Mach-Zehnder interferometer 600 according to the present embodiment. Moreover, the optical coupler 120 shown in Fig. 1 may be further used as the optical branch 610 of the Mach-Zehnder interferometer 600.

That is, the optical branch 610 includes a before-branch optical wave guide 620, an optical branch 630, and the first input optical wave guide 130 and the second input optical wave guide 140 for a side of the optical branch 630. The first input optical wave guide 130, the second input optical wave guide 140, the optical branch 630, and the before-branch optical wave guide 620 of the optical branch 610 correspond to the first input optical wave guide 130, the second input optical wave guide 140, the optical coupler 150, and the output optical wave guide 160 of the optical coupler 120 shown in Fig. 1, respectively. The before-branch optical wave guide 620 propagates the light from the outside to the optical branch 630. The optical branch 630 branches the light from the before-branch optical wave guide 620, and the first light is input into the first input optical wave guide 130, and the second light is input into the second input optical wave guide 140, respectively. The first input optical wave guide 130 and the second input optical wave guide 140 propagate the first light and the second light which were input from the optical branch 630.

The optical mixer 615 includes the first input optical wave guide 130 and the second input optical wave guide 140 for a side of the optical coupler 150, the optical coupler 150, and the output optical wave guide 160. Since these components are equivalent to the components bearing the same reference numeral shown in Fig. 1, respectively, the explanation will be omitted.

As for the embodiment described above, the Mach-Zehnder interferometer 600 may be used as a bi-directional Mach-Zehnder interferometer 600 operable to output the branched and mixed light input into the before-branch optical wave guide 620 from the output optical wave guide 160, while outputting the branched and mixed light input into the output optical wave guide 160 from the before-branch optical wave guide 620.

According to the Mach-Zehnder interferometer 600 described above, the Mach-Zehnder interferometer having a good extinction ratio can be provided.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

## Claims

1. An optical coupler having a Y-branch operable to mix and output a first light and a second light from outside, comprising:
a first input optical wave guide operable to propagate the first light from outside;
a second input optical wave guide operable to propagate the second light from outside;
an optical coupler operable to output a mixed light, which is a mixture of the first light and the second light; and
an output optical wave guide operable to propagate the mixed light and to output it from an end, wherein
percentage per unit length of emitting light being propagated in said output optical wave guide to a periphery of said output optical wave guide is higher than that of said first input optical wave guide or said second input optical wave guide.

2. The optical coupler as claimed in claim 1, wherein a width of said output optical wave guide is less than a width of said first input optical wave guide or a width of said second input optical wave guide.

3. The optical coupler as claimed in claim 1, wherein a cross section area of said output optical wave guide is less than a cross section area of said first input optical wave guide or a cross section area of said second input optical wave guide.

4. The optical coupler as claimed in claim 1, wherein
said first input optical wave guide, said second input optical wave guide, and said output optical wave guide are formed by diffusing metal into portions where the optical wave guides are to be formed in a substrate made of a ferroelectric crystal, and
amount of metal diffusion per unit length of said output optical wave guide is less than that of said first input optical wave guide or said second input optical wave guide.

5. The optical coupler as claimed in claim 4, wherein
said first input optical wave guide, said second input optical wave guide, and said output optical wave guide are formed by diffusing titanium into portions where the optical wave guides are to be formed in a substrate made of lithium niobate, and
amount of titanium diffusion per unit length of said output optical wave guide is less than that of said first input optical wave guide or said second input optical wave guide.

6. The optical coupler as claimed in claim 1, wherein
said first input optical wave guide, said second input optical wave guide, and said output optical wave guide are formed by proton exchange of portion where the optical wave guides are to be formed in a substrate made of a ferroelectric crystal, and
amount of proton exchange per unit length of said output optical wave guide is less than that of said first input optical wave guide or said second input optical wave guide.

7. A Mach-Zehnder interferometer, comprising:
an optical branch operable to branch an input light; and
an optical mixer operable to mix two branched lights,
wherein
the Mach-Zehnder interferometer employs the optical coupler of claim 1 for said optical mixer.

8. The Mach-Zehnder interferometer as claimed in claim 7, wherein
the Mach-Zehnder interferometer employs the optical coupler of claim 1 for said optical branch.

9. A manufacturing method of an optical coupler having a Y-branch operable to mix and output a first light and a second light from outside, comprising steps of:
forming a first input optical wave guide operable to propagate the first light from outside;
forming a second input optical wave guide operable to propagate the second light from outside;
forming an optical coupler operable to output a mixed light, which is a mixture of the first light and the second light; and
forming an output optical wave guide operable to propagate the mixed light and to output it from an end, wherein
the output optical wave guide is formed in said step of forming an output optical wave guide so that a percentage per unit length of emitting light being propagated therein to a periphery of the output optical wave guide is higher than that of the first input optical wave guide or the second input optical wave guide.

10. The manufacturing method of an optical coupler as claimed in claim 9, wherein
each of said step of forming a first input optical wave guide, said step of forming a second input optical wave guide, and said step of forming a output optical wave guide comprises steps of:
forming a metal to form metal film at a portion where an optical wave guide is to be formed on a surface of a substrate made of a ferroelectric crystal;
diffusing the metal film in the substrate to form an optical wave guide, wherein
the metal film, which has smaller width than the metal film formed in said step of forming a first input optical wave guide or said step of forming a second input optical wave guide, is formed in said step of forming a metal film in said step of forming an output optical wave guide.

11. The manufacturing method of an optical coupler as claimed in claim 9, wherein
each of said step of forming a first input optical wave guide, said step of forming a second input optical wave guide, and said step of forming a output optical wave guide comprises steps of:
forming a metal to form metal film at a portion where an optical wave guide is to be formed on a surface of a substrate made of a ferroelectric crystal;
diffusing the metal film in the substrate to form an optical wave guide, wherein
the metal film, which is thinner than the metal film formed in said step of forming a first input optical wave guide or said step of forming a second input optical wave guide, is formed in said step of forming a metal film in said step of forming an output optical wave guide.

12. The manufacturing method of an optical coupler as claimed in claim 10, wherein
a titanium film is formed on a surface of a substrate made of a lithium niobate in said step of forming a metal film, and
an optical wave guide is formed by diffusing the titanium film in the substrate in said step of diffusing the metal film.

13. The manufacturing method of an optical coupler as claimed in claim 9, wherein
each of said step of forming a first input optical wave guide, said step of forming a second input optical wave guide, and said step of forming an output optical wave guide comprises steps of:
forming a metal film at a portion where an optical wave guide is to be formed on a surface of a substrate made of a ferroelectric crystal; and
diffusing the metal film in the substrate to form an optical wave guide,
wherein
said step of forming the metal film in each of said step of forming a first input optical wave guide, said step of forming a second input optical wave guide, and said step of forming an output optical wave guide comprises steps of:
laminating a metal film on the substrate;
forming a mask pattern for masking a portion where the first input optical wave guide, the second input optical wave guide, and the output optical wave guide are to be formed on the metal film laminated on the substrate;
removing a portion not being masked by the mask pattern in the metal film which is laminated on the substrate to form the metal film at a portion where an optical wave guide is to be formed,
wherein
a width of a mask pattern which masks a portion where the output optical wave guide is to be formed is less than a width of a mask pattern which masks a portion where the first input optical wave guide or the second input optical wave guide is to be formed.

14. The manufacturing method of an optical coupler as claimed in claim 9, wherein
said step of forming a first input optical wave guide, said step of forming a second input optical wave guide, and said step of forming an output optical wave guide comprises steps of:
forming a mask pattern which includes openings at portions where the first input optical wave guide, the second input optical wave guide, and the output optical wave guide are to be formed on a surface of a substrate made of a ferroelectric crystal; and
carrying out proton exchange of portions exposed from the mask pattern on the surface of the substrate to form the first input optical wave guide, the second input optical wave guide, and the output optical wave guide, wherein
a width of the opening at a portion where the output optical wave guide is to be formed in said step of forming the mask pattern is less than a width of the opening at a portion where the first input optical wave guide or the second input optical wave guide is to be formed.

15. The manufacturing method of an optical coupler as claimed in claim 9, wherein
said step of forming a first input optical wave guide, said step of forming a second input optical wave guide, and said step of forming an output optical wave guide comprises steps of:
forming a mask pattern which includes openings at portions where the first input optical wave guide, the second input optical wave guide, and the output optical wave guide are to be formed on a surface of a substrate made of a ferroelectric crystal; and
carrying out proton exchange of portions exposed from the mask pattern on the surface of the substrate to form the first input optical wave guide, the second input optical wave guide, and the output optical wave guide, wherein
amount of proton exchange per unit length in the opening at a portion where the output optical wave guide is to be formed in said step of carrying out proton exchange is less than amount of proton exchange per unit length in the opening at a portion where the first input optical wave guide or the second input optical wave guide is to be formed.

16. The manufacturing method of an optical coupler as claimed in claim 11, wherein
a titanium film is formed on a surface of a substrate made of a lithium niobate in said step of forming a metal film, and
an optical wave guide is formed by diffusing the titanium film in the substrate in said step of diffusing the metal film.
